# EUROPÄISCHE PATENTANMELDUNG

(11) **EP 3 591 246 A1**
(43) Veröffentlichungstag der Anmeldung: **08.01.2020**
(21) Anmeldenummer: 19182937.3
(22) Anmeldetag: 27.06.2019
(51) Int. Cl.: F16D 1/094

(54) **REIBSCHLÜSSIGE WELLE-NABE-VERBINDUNG**

(30) Priorität: 05.07.2018 DE 102018116294
(71) Anmelder: Ringspann GmbH, 61348 Bad Homburg (DE)
(72) Erfinder: Eisele, Franz, 61250 Usingen (DE)
(74) Vertreter: Lemcke, Brommer & Partner Patentanwälte Partnerschaft mbB

(57) **Zusammenfassung**

Die Erfindung betrifft eine reibschlüssige Welle-Nabe-Klemmverbindung (1) mit zumindest zwei Konus-Spannringen (4, 5), die an ihren Konusflächen (4a, 5a) aneinanderliegen und durch Spannelemente (6) axial aufeinanderschiebbar sind, wobei die entstehenden Radialkräfte eine reibschlüssige Verbindung zwischen Welle (2) und Nabe (3) bewirken.

Wesentlich dabei ist, dass die aneinanderliegenden Konusflächen (4a, 5a) der Spannringe (4, 5) einen von der Kreisform abweichenden unrunden Querschnitt aufweisen.

## Beschreibung

Die Erfindung betrifft ein Bauteil für eine reibschlüssige Welle-Nabe-Klemmverbindung mit zumindest zwei Konus-Spannringen, die an ihren Konusflächen aneinanderliegen und durch mehrere umfangsverteilte Spannelemente axial aufeinanderschiebbar sind, wobei die entstehenden Radialkräfte eine insbesondere in Umfangsrichtung reibschlüssige Verbindung zwischen Welle und Nabe bewirken.

Derartige reibschlüssige Welle-Nabe-Verbindungen sind standardisierte Maschinenelemente zur Verbindung von Wellen und Naben. Sie können Drehmomente, Axialkräfte, Querkräfte und Biegemomente übertragen. Ihre Vorteile gegenüber formschlüssigen Welle-Nabe-Verbindungen, etwa mittels Passfeder oder Passverzahnung, bestehen vor allem darin, dass die Verbindung spielfrei ist, dass keine oder allenfalls geringe Kerbwirkung entsteht, dass nicht nur höhere Drehmomente, sondern auch Axialkräfte übertragen werden können und dass sich durch die hohe Leistungsdichte kompakte Bauformen erzielen lassen.

Die meisten Konus-Spannringe sind in einem Ringspalt zwischen Welle und Nabe angeordnet. Sie können aber stattdessen auch bei dünnwandigen Naben an deren äußerem Umfang positioniert werden. Ebenso können sie bei dünnwandigen Hohlwellen innerhalb derselben eingebaut werden. In beiden Fällen erzeugen die mit axialen Spannelementen aufeinandergezogenen Konusflächen Radialkräfte, die eine reibschlüssige Klemmverbindung zwischen Welle und Nabe bewirken.

Zum Lösen der genannten Verbindungen ist einer der Konus-Spannringe mit mehreren über dem Umfang verteilten Gewindebohrungen versehen, in welche Abdrückschrauben hineingeschraubt werden können. Diese Abdrückschrauben drücken mit ihrem eingeschraubten Ende gegen den anderen Konus-Spannring und lösen dadurch die Verpressung zwischen beiden Spannringen.

Das übertragbare Drehmoment ist maßgeblich abhängig von der Spannkraft, mit welcher die Spannelemente die Konus-Spannringe aufeinanderpressen und verkeilen, außerdem vom Konuswinkel und vom Reibwert.

Betrachtet man die Verhältnisse zwischen den Konusflächen der Konus-Spannringe, über welche das Drehmoment übertragen werden muss, so lassen sich gegensätzliche Anforderungen erkennen: Eine Erhöhung des Reibwertes führt zwar einerseits zu einer Erhöhung des übertragbaren Drehmomentes, andererseits ist für die Erzeugung einer möglichst hohen Verpressung ein geringer Reibwert anzustreben.

Daraus ergibt sich die Erkenntnis, dass die Reibung in radialer Richtung möglichst groß sein sollte, die Reibung in axialer Richtung hingegen möglichst klein.

Basierend auf diesen Überlegungen liegt der vorliegenden Erfindung die Aufgabe zugrunde, die bekannten reibschlüssigen Welle-Nabe-Klemmverbindungen hinsichtlich ihres übertragbaren Drehmomentes zu verbessern, ohne dass es einer erhöhten axialen Verspannung der Konus-Spannringe relativ zueinander bedarf. Dabei soll sich die erfindungsgemäße Klemmverbindung durch kompakten und kostengünstigen Aufbau auszeichnen.

Diese Aufgabe wird erfindungsgemäß dadurch gelöst, dass die aneinanderliegenden Konusflächen der Spannringe einen von der Kreisform abweichenden, unrunden bzw. unrund hergestellten Querschnitt aufweisen.

Durch den unrunden Querschnitt der Konusflächen ergibt sich eine formschlüssige Verbindung zwischen den Konusflächen und die Drehmomentübertragung erfolgt nicht nur wie bisher allein durch Reibung, sondern auch durch Formschluss. Dabei kann die formschlüssige Kraftübertragung je nachdem, in welchem Ausmaß die Konusflächen unrund gestaltet sind, deutlich überwiegen.

Im Ergebnis lässt sich durch die erfindungsgemäße Gestaltung der Konusflächen somit die Übertragung deutlich höherer Drehmomente als bisher herbeiführen, ohne dass dazu die axiale Verspannung der Konusflächen erhöht werden muss.

Für die Ausbildung der unrunden Konusflächen bieten sich dem Fachmann unterschiedliche Möglichkeiten. Zu beachten ist dabei lediglich, dass die Konusflächen ohne Kerben oder Kanten verlaufen sollten, etwa indem sie einem mathematisch stetigen Kurvenverlauf angenähert sind

Im einfachsten Fall könnten die Konusflächen einen ovalen oder elliptischen Querschnitt aufweisen. Zur Verstärkung des Formschlusses empfiehlt es sich aber, dass sie einen polygonalen oder zykloiden Querschnitt aufweisen, insbesondere mit zumindest drei über ihren Umfang verteilten, schwach ausgebildeten Vorsprüngen in dem einen Konus-Spannring und damit korrespondierenden Rücksprüngen in dem anderen Konus-Spannring.

Die genannten Vorsprünge und Rücksprünge sollten relativ zueinander eine Durchmesser-Differenz von ca. 5 % bis ca. 30 %, vorzugsweise ca. 8 % bis ca. 20 % aufweisen. Dadurch ergeben sich nur geringe Winkelabweichungen der Kontur von der Kreiskontur und die aufeinanderfolgenden Vorsprünge und Rücksprünge können ohne abrupte Konturänderungen ineinander übergehen.

Zweckmäßig werden die Vorsprünge und Rücksprünge durch bogenförmige oder nahezu tangential verlaufende Umfangsabschnitte miteinander verbunden. Dabei empfiehlt es sich, die bogenförmigen oder nahezu tangential verlaufenden Umfangsabschnitte länger auszubilden als die Vorsprünge oder Rücksprünge, insbesondere zumindest 50 %, vorzugsweise zumindest 80 % länger.

Im Bereich der nahezu tangential verlaufenden Umfangsabschnitte ergibt sich eine größere radiale Bauhöhe der Spannringe. Es empfiehlt sich daher, die axialen Spannelemente, z.B. Spannschrauben, radial versetzt zum Zentrum der nahezu tangential verlaufenden Umfangsabschnitte zu positionieren, sodass der dort vorhandene konstruktive Freiraum ausgenutzt wird.

Ein besonderer Vorteil des erfindungsgemäßen Bauteils besteht darin, dass die Konusflächen mit einer reibwertmindernden Beschichtung und/oder einem reibwertmindernden Schmiermittel versehen werden können. Vorzugsweise werden die Konusflächen mit einem Schmiermittel auf Basis von Molybdän(IV)-sulfid-(MoS) bzw. mit mit MoS2-Zusätzen wie etwa MoS2 legiertem Fett behandelt. Hierdurch wird eine verbesserte axiale Verspannung erreicht, die zu wesentlich höheren Drehmomentübertragung zwischen Welle und Nabe führt. Derartige reibwertmindernde Maßnahmen sind bei herkömmlichen Konusspannelementen unzulässig, da sie zu einem Durchrutschen der Konusflächen in Drehrichtung führen würden. Durch die formschlüssige Kraftübertragung zwischen den Konusflächen der Spannringe wird dieser Nachteil überwunden. Die zylindrischen, im Profil kreisrunden Flächen innen zur Welle und außen zur Nabe des Konus-Spann-Elementes können hingegen, um bestmöglichen Reibschluss zu erzielen, trocken gefügt werden. Die Verwendung reibwertmindernder Schmiermittel an den Konusflächen und trockenes Fügen an den zylindrischen Außen- und Innenflächen ermöglicht eine Reduzierung der erforderlichen Anzugsmomente bei gleichzeitig höherer Drehmomentübertragung. Gegenüber herkömmlichen Konus-Spannelementen kann außerdem die Anzahl der Spannelemente (Spannschrauben) reduziert werden, was die die Montagezeit verkürzt.

Eine weitere Abwandlung der Erfindung kann darin bestehen, dass die Konusflächen nicht über ihre gesamte axiale Erstreckung ein unrundes Profil aufweisen, sondern einen ersten Abschnitt mit kreisrundem Profil aufweisen, der in Richtung der Mittelachse der Konus-Spannringe stetig in einen zweiten Abschnitt mit unrundem Profil übergeht. Beispielsweise kann der Konus in seinem kleineren Durchmesserbereich einen kreisrunden Querschnitt aufweisen, der in Richtung des sich kegelförmig vergrößernden Durchmessers in ein unrundes Profil übergeht. Eine solche Ausgestaltung kann insbesondere bei geschlitzten Konus-Spannringen Vorteile in Hinblick auf die Verteilung der Pressungskräfte aufweisen.

Weitere Merkmale und Vorteile ergeben sich aus der Beschreibung eines Ausführungsbeispiels und aus der Zeichnung; dabei zeigt
- Figur 1: einen Längsschnitt durch die erfindungsgemäße Klemmverbindung in zwischen Welle und Nabe eingebautem Zustand;
- Figur 2: eine axiale Draufsicht auf einen inneren Konus-Spannring;
- Figur 3: eine axiale Draufsicht auf einen äußeren Konus-Spannring und
- Figur 4: ein Schrägbild beider Konus-Spannringe in noch nicht eingebautem Zustand.

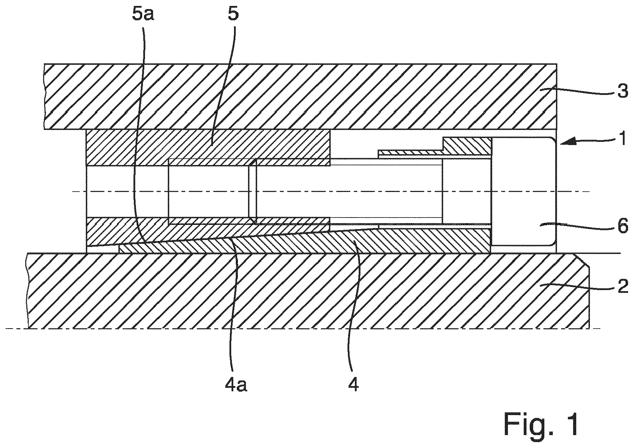

Der Axialschnitt in Figur 1 zeigt eine lösbare Welle-Nabe-Klemmverbindung 1, die zwischen einer Welle 2 und eine Nabe 3 eingebaut und verspannt ist.

Die Welle-Nabe-Verbindung besteht aus einem inneren Konus-Spannring 4, der auf der Welle 2 sitzt, einem äußeren Konus-Spannring 5, der außen die Nabe 3 trägt und aus mehreren über den Umfang verteilten axialen Spannelementen in Form von Schrauben 6.

Die Konus-Spannringe 4 und 5 liegen längs ihrer Konusflächen 4a und 5a aneinander und sind durch die Schrauben 6 relativ zueinander zu verschieben und zu verspannen.

Dazu liegen die Schrauben 6 mit ihrem Schraubenkopf an der Stirnseite des inneren Konus-Spannringes 4 an, durchqueren diesen und sind mit ihrem Gewindeschaft in korrespondierende Gewindebohrungen des äußeren Konus-Spannringes 5 eingeschraubt.

Durch das Anziehen der Schrauben 6 werden die beiden Konus-Spannringe 4 und 5 aufeinander geschoben. Dabei bewirken die aneinanderliegenden Konusflächen 4a und 5a eine radiale Aufweitung ihrer Spannringe, so dass eine Klemmverbindung zwischen Welle 2 und Nabe 3 entsteht.

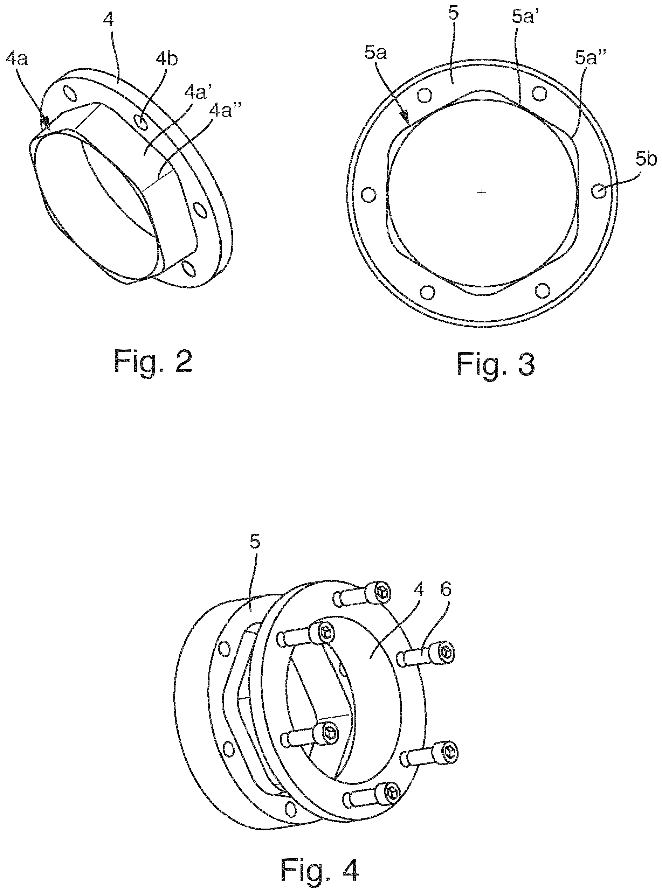

Wesentlich ist nun, dass gemäß den Figuren 2 und 3 die beiden Konus-Spannringe 4 und 5 unrunde Konusflächen 4a bzw. 5a aufweisen. Die Konusflächen 4a und 5a werden bereits in ihrer Herstellung korrespondierend zueinander ausgebildet, sodass sie beim Zusammenstecken der Konus-Spannringe in flächige Anlage miteinander kommen und beim Anziehen der Spannschrauben 6 nicht nur die gewünschte radiale Aufweitung der Klemmverbindung radial nach innen wie auch radial nach außen herbeiführen, sondern auch eine formschlüssige Verbindung eingehen.

Im Ausführungsbeispiel bestehen die Konusflächen 4a und 5a aus annähernd tangential verlaufenden Umfangsabschnitten 4a' bzw. 5a', die an ihren Enden durch bogenförmige Abschnitte 4a" bzw. 5a" miteinander verbunden sind. Dabei fungieren die bogenförmigen Abschnitte 4a" als Vorsprünge, die bogenförmigen Abschnitte 5a" als Rücksprünge.

Die etwa tangentialen Umfangsabschnitte 4a' bzw. 5a' sind mehr als doppelt so lang wie die bogenförmigen Umfangsabschnitte 4a" bzw. 5a".

Im Ausführungsbeispiel bestehen die Konusflächen jeweils aus sechs tangentialen und sechs bogenförmigen Umfangsabschnitten. Es liegt selbstverständlich im Rahmen der Erfindung, die Zahl dieser Umfangsabschnitte zu verkleinern oder zu vergrößern. Dabei ist lediglich zu beachten, dass die Konusflächen ohne abrupte Änderungen der Kontur, insbesondere ohne Spitzen oder Kerben, durchlaufen.

Figur 4 zeigt die beiden Spannringe 4 und 5 und die Spannschrauben 6 in noch nicht montiertem Zustand. Dabei durchqueren die Spannschrauben 6 den inneren Konus-Spannring 4 wie üblich an dessen radial vorstehenden Flansch, sie sind jedoch noch nicht in den äußeren Konus-Spannring 5 eingeschraubt.

Sobald die Konus-Spannringe 4 und 5 axial zusammengefahren und durch die Spannschrauben 6 hinreichend verspannt sind, sind sie nicht nur wie bisher reibschlüssig, sondern aufgrund der unrunden Klemmflächen-Kontur formschlüssig miteinander verbunden.

Das übertragbare Drehmoment wird dadurch gegenüber herkömmlichen reibschlüssigen Welle-Nabe-Klemmverbindungen deutlich erhöht.

Herkömmliche Konus-Spannelemente werden üblicherweise sowohl am Innenals auch am Außenring je einmal geschlitzt, damit die Überbrückung des Spieles, beispielsweise von IT8 auf IT7, ohne nennenswerten Pressungsverlust vonstattengeht. Im Rahmen der vorliegenden Erfindung ist es ebenfalls möglich, die Konus-Spannringe, also Innenring und Außenring, geschlitzt auszuführen. Beim Spannen der Konus-Spannringe findet aufgrund der Schlitzung eine gewisse Relativbewegung der Innenkonusfläche zu der Außenkonusfläche in Umfangsrichtung statt. Dies führt dazu, dass die von der Kreisform abweichenden Konturen der korrespondierenden Konusflächen von Innen- und Außenkonusring bei dieser Relativbewegung nicht mehr optimal zusammenpassen. Beim Spannen kann daher eine geringfügige plastische Verformung der Konus-Spannringe stattfinden, die jedoch in Kauf genommen wird. Alternativ ist es möglich, die Konus-Spannringe ungeschlitzt auszuführen. In diesem Fall sind die zulässigen Passungen entsprechend einzuschränken, z. B. IT7 auf IT6.

## Patentansprüche

1. Bauteil für eine reibschlüssige Welle-Nabe-Klemmverbindung (1) mit zumindest zwei Konus-Spannringen (4, 5), die an ihren Konusflächen (4a, 5a) aneinanderliegen und durch mehre umfangsverteilte Spannelemente (6) axial aufeinanderschiebbar sind, wobei die entstehenden Radialkräfte eine, insbesondere in Umfangsrichtung, reibschlüssige Verbindung zwischen Welle (2) und Nabe (3) bewirken,
**dadurch gekennzeichnet, dass**
die aneinanderliegenden Konusflächen (4a, 5a) der Spannringe (4, 5) einen von der Kreisform abweichenden, unrund hergestellten Querschnitt aufweisen

2. Bauteil nach Anspruch 1, **dadurch gekennzeichnet, dass** die Konusflächen (4a, 5a) einen mathematisch stetigen Kurvenverlauf aufweisen.

3. Bauteil nach Anspruch 1 oder 2, **dadurch gekennzeichnet, dass** die Konusflächen (4a, 5a) einen ovalen Querschnitt aufweisen.

4. Bauteil nach Anspruch 1 oder 2, **dadurch gekennzeichnet, dass** die Konusflächen (4a, 5a) einen polygonalen oder zykloiden Querschnitt aufweisen.

5. Bauteil nach Anspruch 1, 2 oder 4, **dadurch gekennzeichnet, dass** die Konusflächen (4a, 5a) zumindest drei gleichmäßig über ihren Umfang verteilte und miteinander korrespondierende Vorsprünge (4a", 5a") oder Rücksprünge aufweisen, die durch bogenförmige oder etwa tangential verlaufende, miteinander korrespondierende Umfangsabschnitte (4a', 5a') miteinander verbunden sind.

6. Bauteil nach Anspruch 5, **dadurch gekennzeichnet, dass** die Vorsprünge (4a", 5a") oder Rücksprünge und die etwa tangential verlaufenden Umfangsabschnitte (4a', 5a') relativ zueinander eine Durchmesser-Differenz von ca. 5 % bis ca. 30 %, vorzugsweise ca. 8 % bis ca. 20 % aufweisen.

7. Bauteil nach Anspruch 5 oder 6, **dadurch gekennzeichnet, dass** die nahezu tangential verlaufenden Umfangsabschnitte (4a', 5a') in Umfangsrichtung länger sind als die Vorsprünge (4a", 5a") oder die Rücksprünge, insbesondere dass die nahezu tangential verlaufenden Umfangsabschnitte (4a', 5a') zumindest 50 %, vorzugsweise zumindest 100 % länger sind als die Vorsprünge (4a", 5a") oder die Rücksprünge .

8. Bauteil nach einem der vorangehenden Ansprüche, **dadurch gekennzeichnet, dass** die Konusflächen mit einer reibwertmindernden Beschichtung und/oder einem reibwertmindernden Schmiermittel versehen sind, insbesondere einem Schmiermittel auf Molybdän(IV)-sulfid-Basis.

9. Bauteil nach einem der vorangehenden Ansprüche, **dadurch gekennzeichnet, dass** die Konus-Spannringe (4,5) über den Umfang verteilte axial verlaufende Bohrungen (4b, 5b) für die Spannelemente (6) aufweisen und dass diese Bohrungen in Umfangsbereichen maximaler radialer Wandstärke der Konus-Spannringe positioniert sind.

10. Bauteil nach einem der vorangehenden Ansprüche, **dadurch gekennzeichnet, dass** die axialen Spannelemente (6) radial versetzt zum Zentrum der nahezu tangential verlaufenden Umfangsabschnitte (4a', 5a') positioniert sind.

11. Bauteil nach einem der vorangehenden Ansprüche, **dadurch gekennzeichnet, dass** die aneinanderliegenden Konusflächen (4a, 5a) in axialer Richtung einen sich stetig ändernden Querschnittsverlauf aufweisen, der von einem ersten Konusbereich mit kreisrundem Querschnitt in einen Bereich zweiten Konusbereich mit unrundem Querschnitt übergeht.
